# EUROPEAN PATENT SPECIFICATION

(11) **EP 2 402 844 B1**
(45) Date of publication and mention of the grant of the patent: **27.02.2019**
(21) Application number: 11166660.8
(22) Date of filing: 19.05.2011
(51) Int. Cl.: G06F 3/042

(54) **Electronic devices including interactive displays and related methods and computer program products**
Elektronische Vorrichtungen mit interaktiven Anzeigen, sowie zugehörige Verfahren und Computerprogrammprodukte
Dispositifs électroniques incluant des écrans interactifs et procédés associés et produits de programme informatique

(30) Priority: 29.06.2010 US 825545
(43) Date of publication of application: 04.01.2012
(73) Proprietor: Sony Mobile Communications Inc., Shinagawa-ku Tokyo 140-0002 (JP)
(72) Inventor: Sassi, Jari, 226 57 Lund (SE); Lassesson, Kristian, 244 91, Kavlinge (SE)
(74) Representative: Aera A/S

(56) References cited:
- EP-A1- 0 657 841
- WO-A1-2009/152715
- US-A1- 2005 078 095
- US-A1- 2010 141 963

## Description

### FIELD

The present invention relates generally to portable electronic devices and, more particularly, to interactive displays for electronic devices.

### BACKGROUND

Many electronic devices, such as mobile terminals and lap top computers, do not use a conventional keyboard for data entry or manipulation of applications thereon. Instead, conventional electronic devices include an interactive display configured to respond to a touch of a finger or a stylus. Thus, a virtual keypad may be presented on the interactive display and a user can type emails, phone numbers etc. by activating the virtual letters/numbers thereon. One type of interactive display is a touchscreen. A touchscreen is an electronic display device that can detect the presence and location of a touch within the display area. The term generally refers to touching the display of the device with a finger or hand.

A touchscreen has two main attributes. First, it may enable one to interact directly with what is displayed, rather than indirectly with a cursor controlled by a mouse or touchpad. Secondly, the direct interaction is performed without requiring any intermediate device that would need to be held in the hand, such as a stylus or pen. Such displays can be used in combination with desk top computers, laptops, portable devices, networks, personal digital assistants (PDAs), satellite navigation, video games and the like. Conventional interactive displays are typically implemented using a layer of sensitive material above a display for detection of the finger or stylus.

WO 2009/152715 A1 discloses a touch detection sensing device with a camera. EP 0 657 841 A1 and US 2010/141963 A1 both disclose devices that use a reflective surface to detect a touch on a display.

### SUMMARY

An object of the invention is to provide an alternative interactive display.

An electronic device according to claim 1 is hereby provided. Further, a method according to claim 4 and a computer program product according to claim 5 are hereby provided.

Based on the subject-matter of claim 1, the **single camera may** in one preferred embodiment **be** positioned inside the housing of the electronic device. The position determination circuit may be further configured to determine a position of the object on the interactive display based on images obtained from the single camera positioned inside the housing of the electronic device.

In further embodiments, the position determination circuit may be configured to obtain an image of the object using the single camera positioned inside the housing of the electronic device; calculate a start angle and a stop angle of the image based on the position of the object with respect to the interactive display; calculate frame angles between two known edges of the frame and the object with respect to the interactive display; calculate a distance between the object on the interactive display and the camera using the calculated start and stop angles and frame angles; and calculate the position and size of the object on the interactive display based on the calculated distance, start and stop angles and frame angles.

Other electronic devices, methods and/or computer program products according to embodiments of the invention will be or become apparent to one with skill in the art upon review of the following drawings and detailed description. It is intended that all such additional electronic devices, methods and computer program products included within this description, be within the scope of the present invention, as defined by the accompanying claims.

### BRIEF DESCRIPTIONS OF DRAWINGS HEREIN

The accompanying drawings, which are included to provide a further understanding of the invention and are incorporated in and constitute a part of this application, illustrate certain embodiments of the invention.
Figure 1 is a schematic block diagram for a portable electronic device and a cellular communication system that operate according to some embodiments of the present invention.
Figures 2A through 2C are diagrams illustrating interactive displays in accordance with some embodiments.
Figures 3A and 3B are diagrams illustrating interactive displays in accordance with some **examples useful for understanding the invention.**
Figures 4A and 4B are diagrams illustrating interactive displays in accordance with some **examples useful for understanding the invention.**
Figures 5A through 5C are diagrams illustrating interactive displays in accordance with some **examples useful for understanding the invention.**
Figures 6A through 6D are diagrams illustrating interactive displays in accordance with some embodiments.
Figures 7 through 12 are flowcharts illustrating various methods of controlling an interactive display of an electronic device according to some embodiments **or examples useful for understanding the invention discussed herein.**

### DETAILED DESCRIPTION OF EMBODIMENTS

The present invention will be described more fully hereinafter with reference to the accompanying figures, in which embodiments of the invention are shown. This invention may, however, be embodied in many alternate forms and should not be construed as limited to the embodiments set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, and alternatives falling within the scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components, but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to another element, there are no intervening elements present. As used herein the term "and/or" includes any and all combinations of one or more of the associated listed items and may be abbreviated as "/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure. Although some of the diagrams include arrows on communication paths to show a primary direction of communication, it is to be understood that communication may occur in the opposite direction to the depicted arrows.

Some embodiments may be embodied in hardware and/or in software (including firmware, resident software, micro-code, etc.). Consequently, as used herein, the term "signal" may take the form of a continuous waveform and/or discrete value(s), such as digital value(s) in a memory or register. Furthermore, various embodiments may take the form of a computer program product comprising a computer-usable or computer-readable storage medium having computer-usable or computer-readable program code embodied in the medium for use by or in connection with an instruction execution system. Accordingly, as used herein, the terms "circuit" and "controller" may take the form of digital circuitry, such as computer-readable program code executed by an instruction processing device(s) (e.g., general purpose microprocessor and/or digital signal processor), and/or analog circuitry.

Embodiments are described below with reference to block diagrams and operational flow charts. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

For purposes of illustration and explanation only, various embodiments of the present invention are described herein in the context of portable electronic devices. It will be understood, however, that the present invention is not limited to such embodiments and may be embodied generally in any electronic device that is compatible with an interactive display. For example, embodiments of the present invention may be embodied in user interfaces for electronic games and/or music players.

As discussed above, many electronic devices, such as mobile terminals and laptop computers, do not use a conventional keyboard for data entry or manipulation of applications thereon. Instead, conventional electronic devices include an interactive display configured to respond to a touch of a finger or a stylus. Thus, a virtual keypad may be presented on the interactive display and a user can type emails, phone numbers etc. by activating the virtual letters/numbers thereon. As used herein, "interactive display" refers to any type of display, such as a touchscreen, that is activated responsive to an object in proximity thereto. The object can be a finger, stylus, pencil, pen or the like with departing from the scope of embodiments discussed herein. Although embodiments discussed herein are discussed as having interactive displays, device in accordance with some embodiments may have a combination of both mechanical keypads/buttons and interactive displays/virtual buttons without departing from the scope of embodiments discussed herein

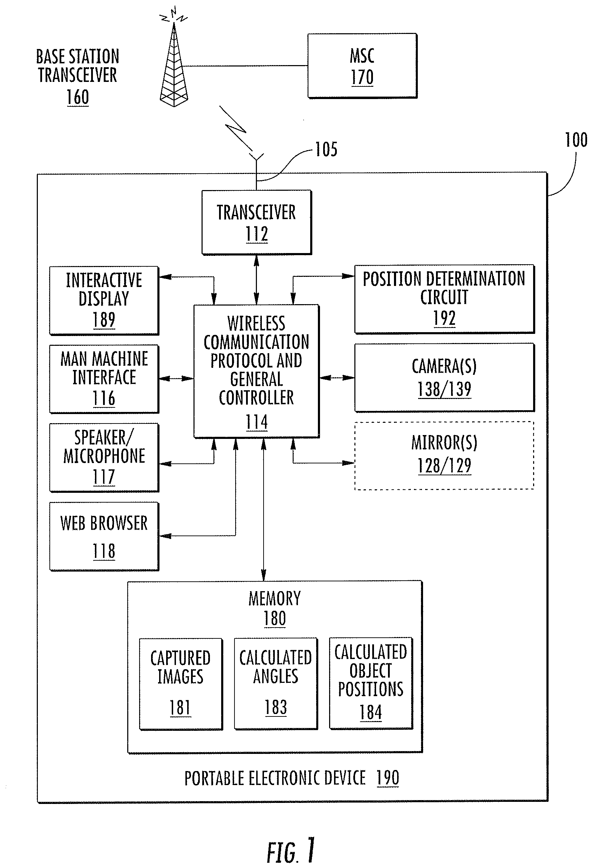

Interactive displays may be used in combination with desk top computers, laptops, portable devices, networks, personal digital assistants (PDAs), satellite navigation, video games and the like. Conventional interactive displays are typically implemented using a layer of sensitive material above a display for detection of the finger or stylus. Conventional interactive displays are typically activated using a single type of object, for example, a pen, a finger or a stylus. Some embodiments discussed herein provide interactive displays that are configured to determine a position of an object, such as a finger or stylus, in proximity of the interactive display based on images captured by one or more cameras. Thus, embodiments discussed herein may provide interactive displays that are responsive to more than one type of object, such as a finger, stylus, pen or pencil. Furthermore, some embodiments may also enable additional features of the touch interface, for example, sensing of an object in proximity to the interactive display before the object actually makes contact with the interactive display as will be discussed further herein with respect to Figures 1 through 12.

Referring first to Figure 1, a schematic block diagram illustrating a portable electronic device 190, such as a mobile phone, desk top computers, laptops, portable devices, networks, personal digital assistants (PDAs), satellite navigation, video games and the like, and a cellular communication system in accordance with some embodiments will be discussed. As illustrated, the portable electronic device 190 includes at least one antenna 105. The portable electronic device 190 may communicate with a cellular base station transceiver 160 connected to a mobile switching center ("MSC") 170, and/or it may communicate through a short range network directly with another wireless communication device (not shown). The portable electronic device 190 can therefore include a transceiver 112 and a wireless communication protocol controller ("communication controller") 114 that are configured to communicate through a wireless air interface with the base station transceiver 160 and/or with the other wireless communication devices. The transceiver 112 typically includes a transmitter circuit and a receiver circuit which cooperate to transmit and receive radio frequency signals. The communication controller 114 can be configured to encode/decode and control communications according to one or more cellular protocols, which may include, but are not limited to, Global Standard for Mobile (GSM) communication, General Packet Radio Service (GPRS), enhanced data rates for GSM evolution (EDGE), code division multiple access (CDMA), wideband-CDMA, CDMA2000, and/or Universal Mobile Telecommunications System (UMTS). The communication controller 114 may alternatively or additionally encode/decode and control communications according to one or more short range communication protocols, which may include, but are not limited to Bluetooth and/or WiFi such as IEEE 802.11 (e.g., IEEE 802.11b-g).

As further illustrated in Figure 1, the portable electronic device 190 can include an interactive display 189 in the housing 100 in accordance with some embodiments, a man machine interface 116 (e.g., virtual keypad of the interactive display), a speaker/microphone 117, and/or a web browser 118 that communicate with the controller 114. It will be understood that other circuits/modules found in portable electronic devices may be included in portable electronic device 190 without departing from the scope of embodiments discussed herein.

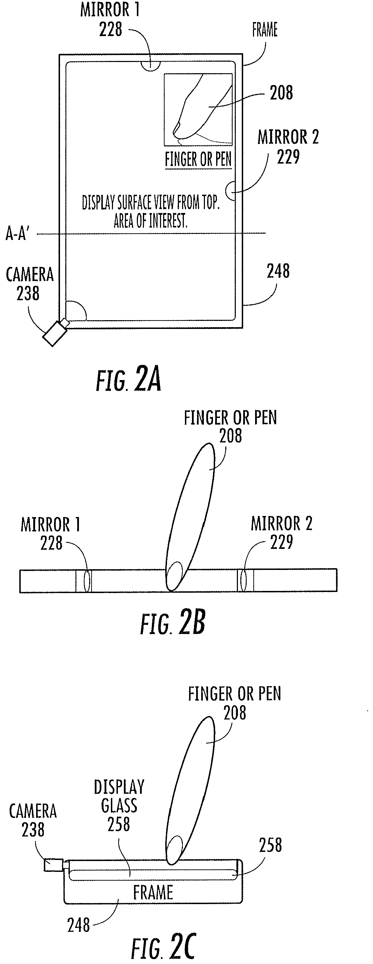

As further illustrated in Figure 1, the portable electronic device 190 may further include a position determination circuit 192, one or more cameras 138/139, optionally (as indicated by dotted lines in Figure 1) one or more mirrors (128/129) and a memory 180 that all communicate with the controller 114. The one or more cameras 138/139 and the one or more optional mirrors 128/129 may be attached to a frame (not shown) of the housing for the interactive display 189 as will be discussed further below with respect to Figures 2A through 6D. Furthermore, the position determination circuit 192, coupled to the one or more cameras 138/139 and the interactive display 18 may be configured to determine a position of an object in proximity to the interactive display based on images captured by the at least one camera in accordance with some embodiments as will be discussed further below with respect to Figures 2A through 6D.

The memory 180 may include the obtained, calculated and stored data used in accordance with some embodiments discussed herein, for example, captured images 181, calculated angles 183 and/or calculated object positions 184. It will be understood that although the memory 180 is illustrated as including three separate data folders, embodiments of the present invention are not limited to this configuration. For example, the folders in memory 180 may be combined to provide two or less folders or four or more folders may be provided without departing from the scope of embodiments discussed herein.

Although various functionality of the portable electronic device 190 has been shown in Figure 1 within separate blocks, it is to be understood that two or more of these functions may be combined in a single physical integrated circuit package and/or the functionality described for one or the blocks may be spread across two or more integrated circuit packages. For example, the functionally described herein for the position determination circuit 192 may split into separate execution circuitry or combined with a general purpose processor and/or a digital signal processor that executes instructions within the memory 180. Accordingly, the memory 180 can include data 181, 183, 184, general control instructions and the like that are executed by the instruction execution circuitry to carry out one or more of the embodiments described herein.

Figures 2A through 2C are diagrams illustrating an interactive display in accordance with some embodiments discussed herein. Figure 2A is a top view of an interactive display 189 (Figure 1) in accordance with some embodiments; Figure 2B is an enlarged view as seen from the camera in accordance with some embodiments; and Figure 2C is a cross section of the interactive display along the line A-A' of Figure 2A in accordance with some embodiments. Details with respect to some embodiments will now be discussed with respect to Figures 1 through 2C. As illustrated in Figure 2A, a single camera 238 and two mirrors 228, 229 are attached to a frame 248. In these embodiments, the position determination circuit 192 may be configured to determine a position of an object 208, for example, a finger or stylus, with respect to the interactive display based on images obtained from the single camera 238 and the at least two mirrors 228, 229. In some embodiments, the camera 238 may have a field of view of about 90 degrees horizontally and from about 10 to about 15 degrees vertically. The mirrors 228 and 229 may have a cylindrical or spherical shape. The mirrors 228 and 229 may be shaped to increase their field of view, thus a cylindrical or spherical shape may provide increased area.

Using a single camera 238 and two mirrors 228, 229 may be more cost effective than providing three cameras. The presence of the two mirrors 228, 229 allows the position of the object 208 to be triangulated. In other words, by using a camera 238 and two mirrors 228,229, there will be three images that can be used to calculate the position of the object 208. For example, the three images may be triangulated to calculate the position of the object 208 with respect to the interactive display 208. If one of the two mirrors 228, 229 is obscured by, for example, the object 208, the position of the object 208 can be determined based on the two remaining images from the other mirror 228 or 229 and the camera 238. Use of two images may allow calculation of the position and size of the object 208. Use of three images may allow further calculation of additional objects 208 or a more accurate size of the object 208.

In some embodiments, the position determination circuit 192 is configured to capture and store (181) a background image of the interactive display 189 using the single camera 238 and the two mirrors 228, 229 before a user interacts with the interactive display 189. Thus, the stored image can be subtracted to obtain information related to the object 208. In some embodiments, capturing and storing the background image before the user interacts with the interactive display 189 may be adaptable to compensate for situations, such as a dirty display, *i.e.* the images of the dirt on the screen will not be considered indicative of where the object 208 is relative to the interactive display 189.

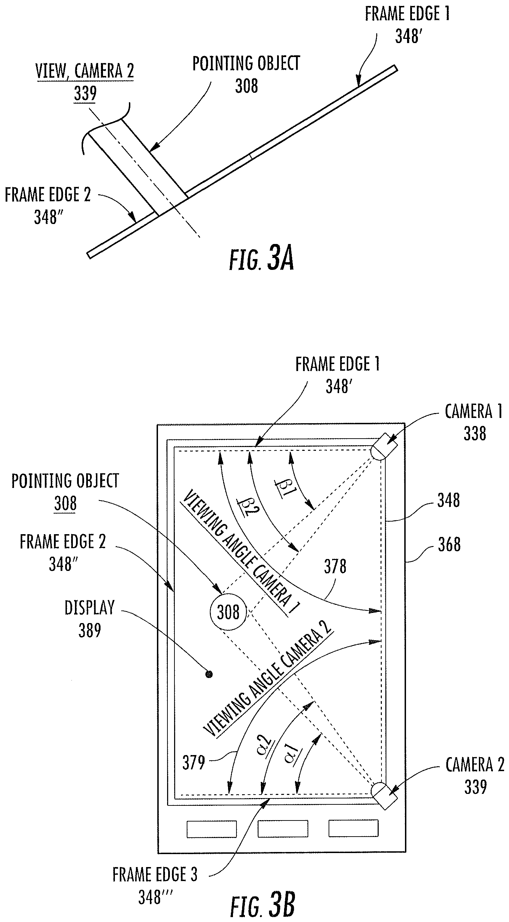

In some embodiments, the image background calculation inside the frame may involve capturing the image inside the frame and storing the same. This can be adaptive and may be used to filter out anomolies, such as dirt on the frame. Outside the frame, the image may be captured and saved. The position determination module 192 may be configured to continuously learn new backgrounds by not using foreground objects in the background image. Examples of this can be found in, for example, the Open Computer Vision Library. Background calculations may be performed in a similar manner for the embodiments discussed below with respect to Figures 3A through 6D.

The position determination module 192 may then be configured to obtain a plurality of images using the single camera 238 and the two mirrors 228, 229. In some embodiments, the camera 238 may be sampled for images at about 100 frames per second. If power is an issue, the sample time may be reduced to save power. The stored background image may be subtracted from each of the obtained plurality of images to provide a plurality of subtracted images. Once the plurality of subtracted images are obtained, a position of the object 208 on the interactive display 189 may be calculated based on the plurality of subtracted images.

In some embodiments the difference between the obtained image and the background may be determined by subtracting the background image from the obtained image. A typical grayscale value for intensity may be used. A high value on difference is likely to be a foreground object. When pixels are similar to the background the difference value will typically be near zero. Some noise may be present due to, for example, reflections caused by sunlight. However, when the object 208 is present, the difference in the obtained image and the background image will be significant. In some embodiments, a low pass filter may be used to remove noise, such as sunlight. In embodiments where ambient light causes a linear offset on the values, it may be possible to align the difference and calculate an offset from the difference. Differences between images may be calculated similar in embodiments discussed below with respect to Figures 3A through 6D.

In particular, the position determination module 192 may be further configured to calculate the position of the object 208 by calculating first and second angles for each of the plurality of subtracted images. The first and second angles may correspond to a start position and a stop position of the object 208.

Once it is detected that the object 208 is touching the surface of the interactive display 189 as illustrated in Figures 2B and 2C, coordinates of the object 208 with respect to the interactive display 189 may be calculated based on the calculated first and second angles for each of the plurality of subtracted images. In some embodiments, an absolute value of intensity versus X value will be obtained in one dimension. Then, the same will be obtained in the second dimension to calculate a distance that that object 208 is from the display 289. The left angle/position will typically be where the intensity value changes significantly from near zero to positive value. A positive derivative may be obtained on the left angle. A decision may be based on a predetermined threshold. The right angle/position will typically change from a positive value to near zero. A negative derivative may be obtained and a decision may be determined based on the result.

Figure 2C further illustrates a display glass 258 and a cross section of the frame 248 along the line A-A' of Figure 2A. In some embodiments, objects 208 situated above the frame 248 may be detected. In these embodiments, the camera 238 may have a wider vertical viewing angle and may have spherical mirrors. In some embodiments, an infrared (IR) light may be used to enhance detection of human skin to provide more sensitive recognition.

Figure 3A is a diagram illustrating a view from a second of two cameras in accordance with some **examples.** Figure 3B is a top view of an interactive display in accordance with some **examples.** Details with respect to some embodiments will now be discussed with respect to Figures 1, 3A and 3B. As illustrated in Figure 3B, in these **examples**, two cameras 338 and 339 are provided and there are no mirrors present. In these **examples,** the position determination circuit 192 is configured to determine a position of the object 308 with respect to the interactive display 389 based on images obtained from the at least two cameras 338 and 339. Use of two images may allow calculation or the position and size of the object 308. The cameras 338 and 339 may have a field of view of about 90 degrees horizontally and from about 10 to about 15 degrees vertically. For example, viewing angles 378 and 379 illustrated in Figure 3B. In particular, Figure 3A illustrates the view from camera 339 of Figure 3B with respect to a second frame edge 348" and a first frame edge 348'.

In some **examples,** the position determination circuit 192 is configured to capture and store (181) a background image of the interactive display 189 using the two cameras 338,339 before a user interacts with the interactive display 189. Thus, the stored image can be subtracted to obtain information related to the object 308. In some embodiments, capturing and storing the background image before the user interacts with the interactive display 189 may be adaptable to compensate for situations, such as a dirty display, *i.e.* the images of the dirt on the screen will not be considered indicative of where the object 308 is relative to the interactive display 189.

The position determination module 192 may then be configured to obtain a plurality of images using the cameras 338 and 339. In some **examples,** the cameras 338 and 339 may be sampled for images at about 100 frames per second. If power is an issue, the sample time may be reduced to save power. The stored background image may be subtracted from each of the obtained plurality of images to provide a plurality of subtracted images. Once the plurality of subtracted images are obtained, a position of the object 308 on the interactive display 189 may be calculated based on the plurality of subtracted images.

In particular, in some embodiments, the position determination module 192 may be further configured to calculate the position of the object 308 by calculating first and second angles for each of the plurality of subtracted images. The first and second angles may correspond to a start position and a stop of the object 308, for example, angles α1 and α2 corresponding to camera 339 of Figure 3B and angles β1 and β2 corresponding to camera 338 of Figure 3B. As further illustrated in Figures 3B, angles α1 and α2 corresponding to camera 339 of Figure 3B are calculated with respect to a first frame edge 348' and angles β1 and β2 corresponding to camera 338 of Figure 3B are calculated with respect to a third frame edge 348"'.

Once it is detected that the object 308 is touching the surface of the interactive display 389 as illustrated in Figures 3A and 3B, coordinates of the object 308 with respect to the interactive display 389 may be calculated based on the calculated first and second angles for each of the plurality of subtracted images.

In some **examples,** objects 308 situated above the frame 348 may be detected. In these **examples,** the cameras 338 and 339 may have a wider vertical viewing angle and may have spherical mirrors. **Examples** illustrated in Figures 3A and 3B may provide a cheaper alternative to capacitive and resistive touch displays as there may not be a film or additional layer on top of the display glass.

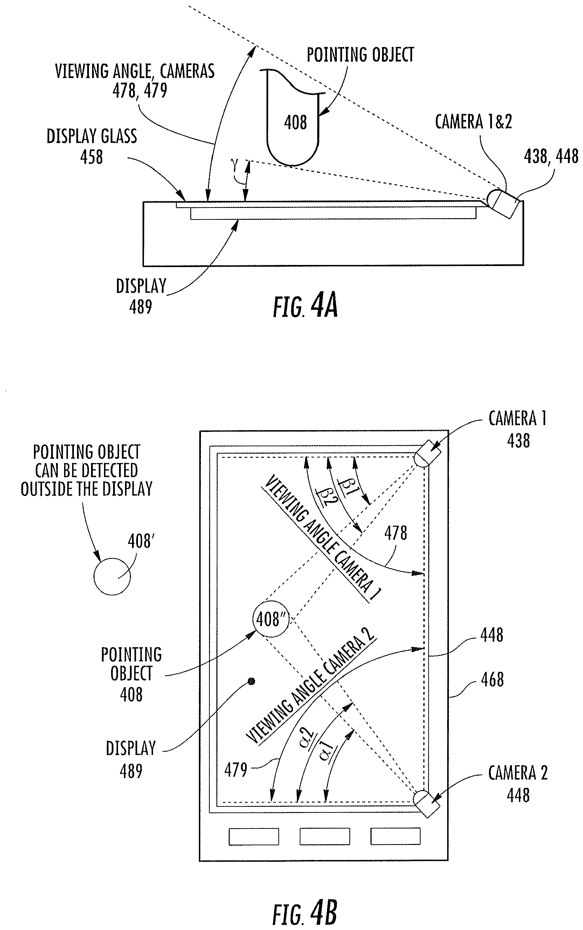

Figure 4A is a cross section of an interactive display illustrating detection of the object 408 above the interactive display 489 in accordance with some **examples.** Figure 4B is a top view of the interactive display illustrating an object 408 outside of the display and in proximity to the display in accordance with some **examples** discussed herein. Details with respect to **examples** illustrated in Figures 4A and 4B will not be discussed with respect to Figures 1, 4A and 4B.

As illustrated in Figures 4A and 4B, in these embodiments, two cameras 438 and 439 are provided and there are no mirrors present. In these **examples,** the position determination circuit 192 is configured to determine a position of the object 408 with respect to the interactive display 489 based on images obtained from the at least two cameras 438 and 439. As illustrated in Figure 4B, the cameras 438 and 439 are positioned in two of the four corners of the display 489. The cameras 438 and 439 may have a field of view of about 90 degrees horizontally and more than zero degrees vertically. For example, viewing angles 478 and 479 are illustrated in Figure 4B. In particular, Figure 4A illustrates a cross section illustrating cameras 438,439, viewing angles 478, 479 and the object 408.

In some **examples,** the position determination circuit 192 is configured to capture and store (181) a background image of the interactive display 489 using the two cameras 438, 439 before a user interacts with the interactive display 189. Thus, the stored image can be subtracted to obtain information related to the object 408. In some embodiments, capturing and storing the background image before the user interacts with the interactive display 489 may be adaptable to compensate for situations, such as a dirty display, *i.e.* the images of the dirt on the screen will not be considered indicative of where the object 408 is relative to the interactive display 489.

The position determination module 192 may then be configured to obtain a plurality of images using the cameras 438 and 439. In some **examples,** the cameras 438 and 439 may be sampled for images at about 100 frames per second. If power is an issue, the sample time may be reduced to save power. The stored background image may be subtracted from each of the obtained plurality of images to provide a plurality of subtracted images. Once the plurality of subtracted images are obtained, a position of the object 408 on the interactive display 189 may be calculated based on the plurality of subtracted images.

In particular, in some embodiments, the position determination module 192 may be further configured to calculate the position of the object 408 by calculating first and second angles for each of the plurality of subtracted images. The first and second angles may correspond to a start position and a stop position of the object 408, for example, angles α1 and α 2 corresponding to camera 439 of Figure 4B and angles β1 and β2 corresponding to camera 438 of Figure 4B.

Once the object 408', 408" is detected in proximity to the interactive display 489, the calculated first and second angles, angles α1 and α2 and angles β1 and β2, are compared. The position determination module 192 is then configured to determine an intersection point of the camera views as illustrated in Figure 4B based on the comparison of the angles. If the intersection point is located on or above the display 489, the intersection point is considered a pointer 408 for use with the interactive display 489. Thus, according to **examples** illustrated in Figures 4A and 4B, the object 408 may be detected even if it is outside the display surface.

Once it is detected that the object 408 is touching the surface of the interactive display 489, coordinates of the object 408 with respect to the interactive display 389 may be calculated based on the calculated first and second angles for each of the plurality of subtracted images. **Examples** illustrated in Figures 4A and 4B may provide a cheaper alternative to capacitive and resistive touch displays as there may not be a film or additional layer on top of the display glass.

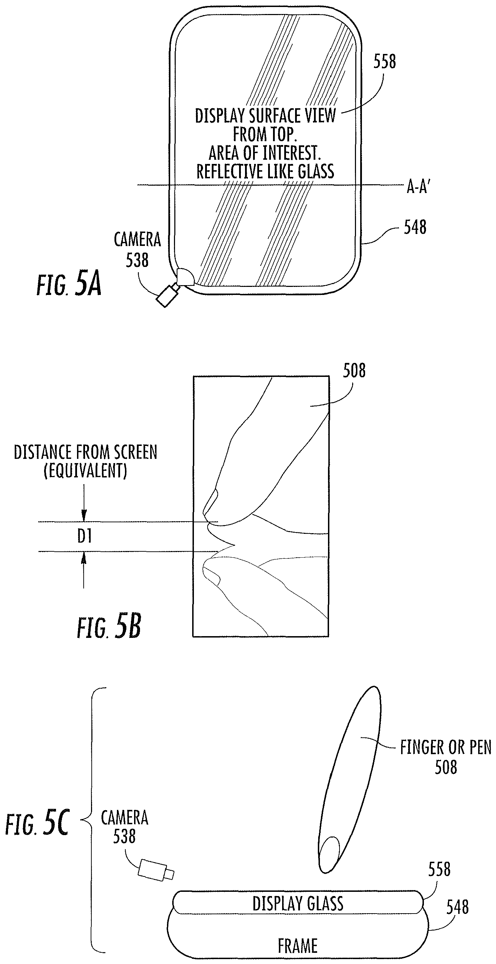

Figure 5A is a top view of a display surface of an interactive display having a reflective surface in accordance with some **examples.** Figure 5B is a photograph of a user's finger contacting the reflective display in accordance with some **examples** discussed herein. Figure 5C is a cross section of the portable electronic device along the line A-A' in accordance with some **examples.** Details with respect to **examples** illustrated in Figures 4A and 4B will not be discussed with respect to Figures 1 and 5A-5C.

As illustrated in Figures 5A and 5C, in these **examples, a** single camera 538 is provided and there are no mirrors present. In these **examples,** the position determination circuit 192 is configured to determine a position of the object 508 with respect to the interactive display 589 based on image obtained from the camera 538 and a reflection of the object 508 in the reflective surface 558 of the interactive display 589 as viewed by the single camera 538. As illustrated in Figures 5A and 5C, the camera 538 is positioned in one of the four corners of the display 589. The camera 538 may have a field of view of about 90 degrees horizontally and less than from about 10 to about 15 degrees vertically. In some **examples,** multiple cameras may be provided to allow for multi-touch implementation.

In some **examples,** the position determination circuit 192 is configured to capture and store (181) a background image of the interactive display 589 using the camera 538 and the reflection as viewed from the camera 538 before a user interacts with the interactive display 189. Thus, the stored image can be subtracted to obtain information related to the object 508. In some **examples,** capturing and storing the background image before the user interacts with the interactive display 589 may be adaptable to compensate for situations, such as a dirty display, *i.e.* the images of the dirt on the screen will not be considered indicative of where the object 508 is relative to the interactive display 589.

The position determination module 192 may then be configured to obtain a plurality of images using the camera 538 and the reflective surface of the display 558. In some **examples,** the camera 538 may be sampled for images at about 100 frames per second. If power is an issue, the sample time may be reduced to save power. The position determination module 192 is configured to perform a computer vision calculation to separate the object of interest 508 with the stored background image. Then, the object of interest 508 may be correlated with the mirror image of the same object of interest 508 in the reflective display 558 to identify the corresponding object. This may be useful if there is more then one object. The position determination module 192 can detect a "touch" by the object of interest 508 when the closest distance D1 (Figure 5B) between the object and the mirror image is about zero.

The image illustrated in Figure 5B is the view from the camera 538. This image is used to calculate a distance that the object 508 is from the left of the display, for example, in pixels. The resulting distance may be used to calculate a horizontal angle. The number of pixels in the vertical direction can be used to calculate the distance the object 508 is from the camera 538. These calculated parameters can be used to calculate the position of the object of interest 508.

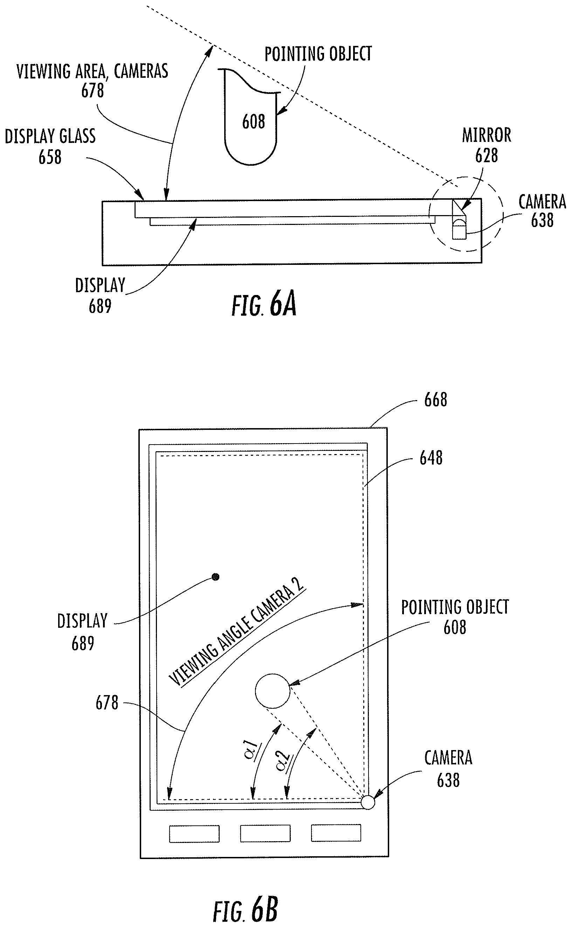

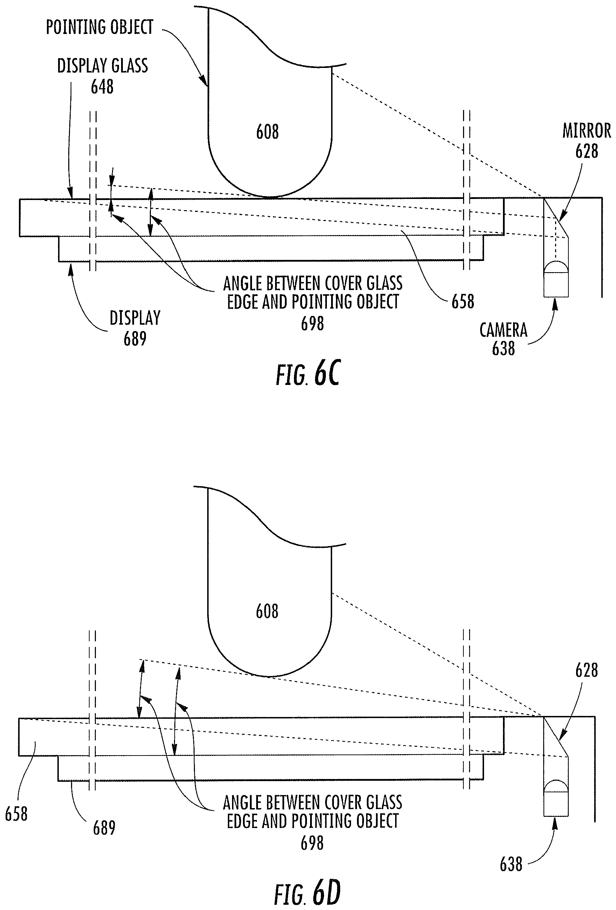

Figure 6A is a cross section of an interactive display in accordance with some embodiment. Figure 6B is a top view of an interactive display in accordance with some embodiment. Figure 6C is a cross section of an interactive display in accordance with some embodiment. Figure 6D is a cross section of an interactive display in accordance with some embodiment. Details with respect to **examples** illustrated in Figures 4A and 4B will not be discussed with respect to Figures 1 and 6A-6D.

As illustrated in Figures 5A and 5C, in these embodiments, a single camera 638 is provided inside a housing of the device and there are no mirrors present. In these embodiments, the position determination circuit 192 is configured to determine a position of the object 608 with respect to the interactive display 689 based on image obtained from the camera 638 positioned inside the housing of the device. As illustrated in Figures 6A-6D, the camera 638 is positioned in one of the four corners of the display 689.

In some embodiments, the position determination circuit 192 is configured to obtain an image of the object 608 using the single camera 638 positioned inside the housing of the electronic device. The obtained image can be used to calculate a start angle α1 and a stop angle α2 (Figure 6B) of the image based on the position of the object with respect to the interactive display 689. The obtained image can also be used to calculate frame angles between two known edges of the frame and the object 608 with respect to the interactive display 689. Thus, the distance between the object 608 and the camera 638 can be calculated. Using the calculated start angle α1 and a stop angle α2, frame angle and calculated distance between the object 608 and the camera 638, the position and size of the object 608 can be determined.

According to embodiments illustrated in Figures 6A through 6D, an object 608 can be detected on and above the display with a viewing in and above the display glass 648. For example, as illustrated in Figures 6A, 6C and 6D, angle 678, 698 and 698, respectively. Accordingly, it may be possible to detect the object 608 in x, y and z directions and before it makes contact with the display. In some embodiments, IR light may be used to enhance the detection of human skin in embodiments where the human finger is used as the object 608.

It will be understood that in embodiments where the frame is not present and the background image changes significantly, for example, when the device is moving, it is important to calculate a good prediction to reconstruct background so that the foreground can be determined. The foreground and background will be used to determine the position of the object.

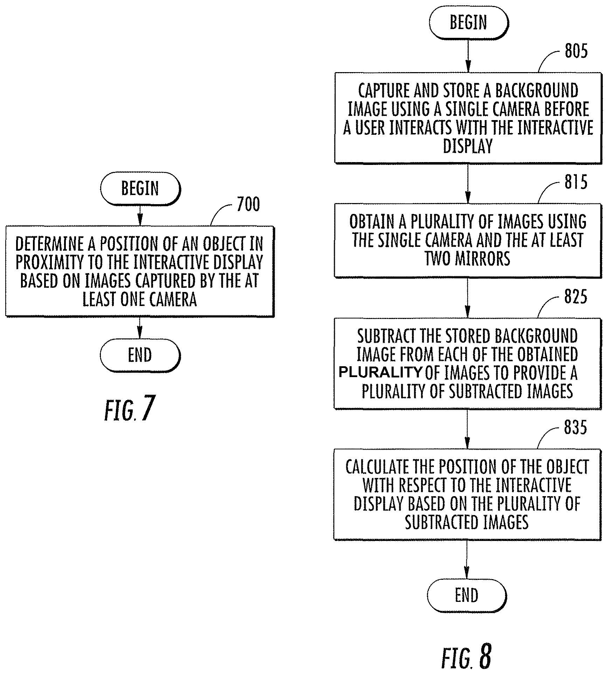

Referring now to the flowcharts of Figures 7 through 12, various methods of controlling an interactive display of an electronic device will be discussed. As illustrated in Figure 1, the electronic device includes a housing; an interactive display connected to the housing; a frame associated with the interactive display; and at least one camera coupled to the interactive display and frame. Referring first to Figure 7, operations begin at block 700 by determining a position of an object in proximity to the interactive display based on images captured by the at least one camera. As used herein, "at least one camera" refers to one or more cameras as well as mirrors, reflective displays and the like that may be used in combination with the at least one camera.

In some examples including a single camera, a reflective surface of the display may be used in addition to the camera. In these examples, a position of the object with respect to the interactive display may be determined based on images obtained from the single camera and a reflection of the object in the reflective surface of the interactive display as viewed by the single camera.

Referring now to Figure 8, methods of controlling an interactive display including a single camera at least two mirrors attached to the frame will be discussed. Using the single camera and at least two mirrors, a position of the object with respect to the interactive display may be determined based on images obtained from the single camera and the at least two mirrors. As illustrated in Figure 8, operations begin at block 805 by capturing and storing a background image of the interactive display using the single camera before a user interacts with the interactive display. A plurality of images are obtained using the single camera and the at least two mirrors (block 815). The stored background image is subtracted from each of the obtained plurality of images to provide a plurality of subtracted images (block 825). The position of the object on the interactive display is calculated based on the plurality of subtracted images (block 835).

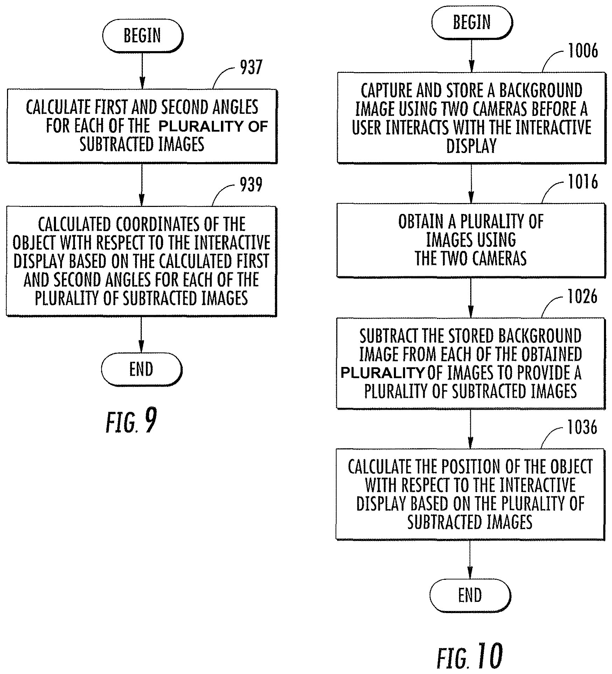

Referring now to Figure 9, details with respect to calculating the position of the object of block 835 will be discussed. As illustrated in Figure 9, operations begin at block 937 by calculating first and second angles for each of the plurality of subtracted images. The first angle corresponds to a start position of the object and the second angle corresponds to a stop position of the object. Coordinates of the object are calculated with respect to the interactive display based on the calculated first and second angles for each of the plurality of subtracted images (block 939).

Referring now to Figure 10, example methods for controlling an interactive display including two cameras attached to the frame will be discussed. A position of the object may be determined with respect to the interactive display based on images obtained from the at least two cameras. As illustrated in Figure 10, operations begin at block 1006 by capturing and storing a background image of the interactive display using the two cameras before a user interacts with the interactive display. A plurality of images are obtained using the two cameras (block 1016). The stored background image is subtracted from each of the obtained plurality of images to provide a plurality of subtracted images (block 1026). The position of the object is calculated with respect to the interactive display based on the plurality of subtracted images (block 1036).

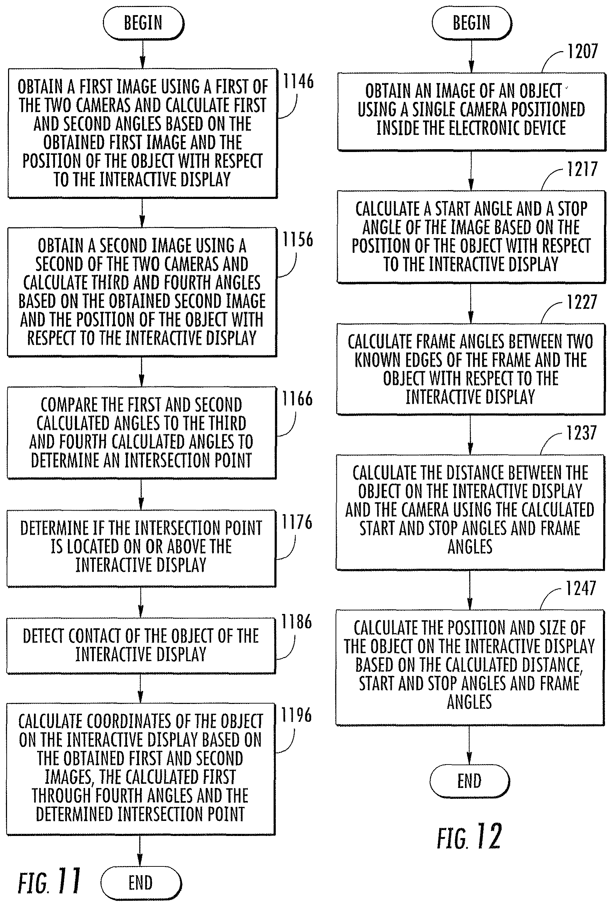

Referring now to Figure 11, example methods for controlling an interactive display including two cameras attached to the frame will be discussed. As illustrated in Figure 11, operations begin at block 1146 by obtaining a first image using a first of the two cameras and calculating first and second angles based on the obtained first image and the position of the object with respect to the interactive display. A second image is obtained using a second of the two cameras and third and forth angles are calculated based on the obtained second image and the position of the object with respect to the interactive display (block 1156). The first and second calculated angles of the first obtained image are compared to the third and forth angles of the second obtained image to determine an intersection point (block 1166). It is determined if the intersection point is located on or above the interactive display (block 1176). Contact of the object on the interactive display is detected (block 1186). Coordinates of the object on the interactive display are calculated based on the obtained first and second images, the calculated first through fourth angles and the determined intersection point (block 1196).

Referring now to Figure 12, methods for controlling an interactive display including a single camera situated inside the housing of the electronic device will be discussed. A position of the object on the interactive display may be determined based on images obtained from the single camera positioned inside the housing of the electronic device. Operations for determining a position begin at block 1207 by obtaining an image of the object using the single camera positioned inside the housing of the electronic device. A start angle and a stop angle of the image is calculated based on the position of the object with respect to the interactive display (block 1217). Frame angles between two known edges of the frame and the object are calculated with respect to the interactive display (block 1227). A distance between the object on the interactive display and the camera are calculated using the calculated start and stop angles and frame angles (block 1237). The position and size of the object on the interactive display may be calculated based on the calculated distance, start and stop angles and frame angles (block 1247).

Some embodiments discussed above may be embodied in hardware and/or in software (including firmware, resident software, micro-code, etc.). Consequently, as used herein, the term "signal" may take the form of a continuous waveform and/or discrete value(s), such as digital value(s) in a memory or register. Furthermore, various embodiments may take the form of a computer program product on a computer-usable or computer-readable storage medium having computer-usable or computer-readable program code embodied in the medium for use by or in connection with an instruction execution system. Accordingly, as used herein, the terms "circuit" and "controller" may take the form of digital circuitry, such as computer-readable program code executed by an instruction processing device(s) (e.g., general purpose microprocessor and/or digital signal processor), and/or analog circuitry.

Embodiments are described above with reference to block diagrams and operational flow charts. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Although various embodiments of the present invention are described in the context of portable electronic devices for purposes of illustration and explanation only, the present invention is not limited thereto. It is to be understood that the present invention can be more broadly used in any sort of electronic device having an interactive display in accordance with some embodiments discussed herein.

In the drawings and specification, there have been disclosed exemplary embodiments of the invention. However, many variations and modifications can be made to these embodiments without substantially departing from the principles of the present invention. Accordingly, although specific terms are used, they are used in a generic and descriptive sense only and not for purposes of limitation, the scope of the invention being defined by the following claims.

## Claims

1. An electronic device (190) comprising:
a housing (100);
an interactive display (189) connected to the housing (100);
a frame (248) associated with the interactive display (189);
a single camera (238) coupled to the interactive display (189) in one corner of the frame (248); and
a position determination circuit (192) coupled to the camera (238) and the interactive display (189), the position determination circuit (192) configured to determine a position of an object in proximity to the interactive display (189) based on images captured by the single camera (238),
the electronic device further comprising at least two mirrors (228,229) attached to different frame sides (248);
the position determination circuit (192) being further configured to:
determine a position of the object with respect to the interactive display (189) based on images obtained from the single camera and the at least two mirrors by triangulation;
**characterized in that** the position determination circuit (192) is further configured to:
capture and store a background image of the interactive display (189) using the single camera (238) before a user interacts with the interactive display (189);
obtain a plurality of images using the single camera (238) and the at least two mirrors (228,229);
subtract the stored background image from each of the obtained plurality of images to provide a plurality of subtracted images; and to
calculate the position of the object on the interactive display (189) based on the plurality of subtracted images,
wherein the position determination circuit (192) is further configured to calculate the position of the object by:
calculating first and second angles for each of the plurality of subtracted images, the first angle corresponding to a start position of the object and the second angle corresponding to a stop position of the object, the angles being respectively measured between the object, the camera position and one thereto adjacent frame side; and
calculating coordinates of the object with respect to the interactive display (189) based on the calculated first and second angles for each of the plurality of subtracted images.

2. The electronic device (190) of claim 1, wherein the single camera is positioned inside the housing (100) of the electronic device (190), the position determination circuit (192) being further configured to determine a position of the object on the interactive display (189) based on images obtained from the single camera (238) positioned inside the housing (100) of the electronic device (190).

3. The electronic device (190) of claim 2, wherein the position determination circuit (192) is configured to:
obtain an image of the object using the single camera (238) positioned inside the housing (100) of the electronic device (190);
calculate a start angle and a stop angle of the image based on the position of the object with respect to the interactive display (189);
calculate frame angles between two known edges of the frame and the object with respect to the interactive display (189);
calculate a distance between the object on the interactive display (189) and the camera (238) using the calculated start and stop angles and frame angles; and
calculate the position and size of the object on the interactive display (189) based on the calculated distance, start and stop angles and frame angles.

4. A method of controlling an interactive display (189) of an electronic device (190), the electronic device (190) including a housing (100); an interactive display (189) connected to the housing (100); a frame (248) associated with the interactive display (189); and a single camera (238) coupled to the interactive display (189) in one corner of the frame (248), the method comprising:
determining a position of an object in proximity to the interactive display (189) based on images captured by the single camera,
wherein the electronic device further comprises at least two mirrors attached to different frame sides, the method further comprising:
determining a position of the object with respect to the interactive display based on images obtained from the single camera and the at least two mirrors by triangulation, **characterized in that** the method further comprises:
capturing and storing a background image of the interactive display using the single camera before a user interacts with the interactive display;
obtaining a plurality of images using the single camera and the at least two mirrors;
subtracting the stored background image from each of the obtained plurality of images to provide a plurality of subtracted images;
calculating the position of the object on the interactive display based on the plurality of subtracted images, wherein calculating the position of the object comprises:
calculating first and second angles for each of the plurality of subtracted images, the first angle corresponding to a start position of the object and the second angle corresponding to a stop position of the object, the angles being respectively measured between the object, the camera position and one thereto adjacent frame side; and
calculating coordinates of the object with respect to the interactive display
based on the calculated first and second angles for each of the plurality of subtracted images.

5. A computer program product for controlling an interactive display of an electronic device, the electronic device including a housing; an interactive display connected to the housing; a frame associated with the interactive display; and a single camera coupled to the interactive display in one corner of the frame, the computer program product comprising:
a computer-readable storage medium having computer-readable program code embodied in said medium, said computer-readable program code comprising:
computer-readable program code configured to determine a position of an object in proximity to the interactive display based on images captured by the single camera,
wherein the electronic device further comprises at least two mirrors attached to different frame sides,
the computer program product further comprises computer-readable program code configured to:
determine a position of the object with respect to the interactive display based on images obtained from the single camera and the at least two mirrors by triangulation,
**characterized in that** the computer-readable program code is further configured to:
capture and store a background image of the interactive display using the single camera before a user interacts with the interactive display;
obtain a plurality of images using the single camera and the at least two mirrors;
subtract the stored background image from each of the obtained plurality of images to provide a plurality of subtracted images;
calculate the position of the object on the interactive display based on the plurality of subtracted images, wherein calculating the position of the object comprises:
calculate first and second angles for each of the plurality of subtracted images, the first angle corresponding to a start position of the object and the second angle corresponding to a stop position of the object, the angles being respectively measured between the object, the camera position and one thereto adjacent frame side; and
calculate coordinates of the object with respect to the interactive display based on the calculated first and second angles for each of the plurality of subtracted images.

## Patentansprüche

1. Elektronische Vorrichtung (190), Folgendes umfassend:
ein Gehäuse (100);
eine interaktive Anzeige (189), die mit dem Gehäuse (100) verbunden ist;
einen Rahmen (248), der der interaktiven Anzeige (189) zugeordnet ist;
eine einzelne Kamera (238), die mit der interaktiven Anzeige (189) in einer Ecke des Rahmens (248) gekoppelt ist; und
eine Positionsbestimmungsschaltung (192), die mit der Kamera (238) und der interaktiven Anzeige (189) gekoppelt ist, wobei die Positionsbestimmungsschaltung (192) konfiguriert ist, um eine Position eines Objekts in der Nähe der interaktiven Anzeige (189) basierend auf Bildern, die von der einzelnen Kamera (238) aufgenommen wurden, zu bestimmen,
wobei die elektronische Vorrichtung ferner zumindest zwei Spiegel (228, 229) umfasst, die an verschiedenen Rahmenseiten (248) befestigt sind;
wobei die Positionsbestimmungsschaltung (192) ferner konfiguriert ist, zum:
Bestimmen einer Position des Objekts in Bezug auf die interaktive Anzeige (189) basierend auf Bildern, die von der einzelnen Kamera und den zumindest zwei Spiegeln durch Triangulation erhalten wurden;
**dadurch gekennzeichnet, dass** die Positionsbestimmungsschaltung (192) ferner konfiguriert ist, zum:
Aufnehmen und Speichern eines Hintergrundbildes der interaktiven Anzeige (189) unter Verwendung der einzelnen Kamera (238), bevor ein Benutzer mit der interaktiven Anzeige (189) interagiert;
Erhalten einer Vielzahl von Bildern unter Verwendung der einzelnen Kamera (238) und der zumindest zwei Spiegel (228, 229) ;
Subtrahieren des gespeicherten Hintergrundbildes von jeder der erhaltenen Vielzahl von Bildern, um eine Vielzahl von subtrahierten Bildern bereitzustellen; und zum
Berechnen der Position des Objekts auf der interaktiven Anzeige (189) basierend auf der Vielzahl von subtrahierten Bildern,
wobei die Positionsbestimmungsschaltung (192) ferner konfiguriert ist, um die Position des Objekts zu berechnen durch:
Berechnen eines ersten und eines zweiten Winkels für jede der Vielzahl von subtrahierten Bildern, wobei der erste Winkel einer Startposition des Objekts entspricht und der zweite Winkel einer Stoppposition des Objekts entspricht, wobei die Winkel jeweils zwischen dem Objekt, der Kameraposition und einer dazu benachbarten Rahmenseite gemessen werden; und
Berechnen von Koordinaten des Objekts in Bezug auf die interaktive Anzeige (189) basierend auf dem berechneten ersten und zweiten Winkel für jede der Vielzahl von subtrahierten Bildern.

2. Elektronische Vorrichtung (190) nach Anspruch 1, wobei die einzelne Kamera in dem Gehäuses (100) der elektronischen Vorrichtung (190) positioniert ist, wobei die Positionsbestimmungsschaltung (192) ferner konfiguriert ist, um eine Position des Objekts auf der interaktiven Anzeige (189) basierend auf Bildern zu bestimmen, die von der einzelnen Kamera (238) erhalten wurden, die in dem Gehäuses (100) der elektronischen Vorrichtung (190) positioniert ist.

3. Elektronische Vorrichtung (190) nach Anspruch 2, wobei die Positionsbestimmungsschaltung (192) konfiguriert ist, zum:
Erhalten eines Bildes des Objekts unter Verwendung der einzelnen Kamera (238), die in dem Gehäuses (100) der elektronischen Vorrichtung (190) positioniert ist;
Berechnen eines Startwinkels und eines Stoppwinkels des Bildes basierend auf der Position des Objekts in Bezug auf die interaktive Anzeige (189);
Berechnen von Rahmenwinkeln zwischen zwei bekannten Kanten des Rahmens und des Objekts in Bezug auf die interaktive Anzeige (189);
Berechnen eines Abstands zwischen dem Objekt auf der interaktiven Anzeige (189) und der Kamera (238) unter Verwendung der berechneten Start- und Stoppwinkel und Rahmenwinkel; und
Berechnen der Position und Größe des Objekts auf der interaktiven Anzeige (189) basierend auf dem berechneten Abstand, den Start- und Stoppwinkeln und Rahmenwinkeln.

4. Verfahren zum Steuern einer interaktiven Anzeige (189) einer elektronischen Vorrichtung (190), wobei die elektronische Vorrichtung (190) ein Gehäuse (100); eine mit dem Gehäuse (100) verbundene interaktive Anzeige (189); einen der interaktiven Anzeige (189) zugeordneten Rahmen (248); und eine einzelne Kamera (238), die mit der interaktiven Anzeige (189) in einer Ecke des Rahmens (248) gekoppelt ist, beinhaltet, wobei das Verfahren Folgendes umfasst:
Bestimmen einer Position eines Objekts in der Nähe der interaktiven Anzeige (189) basierend auf Bildern, die von der einzelnen Kamera aufgenommen wurden,
wobei die elektronische Vorrichtung ferner zumindest zwei Spiegel umfasst, die an verschiedenen Rahmenseiten befestigt sind, wobei das Verfahren ferner Folgendes umfasst:
Bestimmen einer Position des Objekts in Bezug auf die interaktive Anzeige basierend auf Bildern, die von der einzelnen Kamera und den zumindest zwei Spiegeln durch Triangulation erhalten wurden, **dadurch gekennzeichnet, dass** das Verfahren ferner Folgendes umfasst:
Aufnehmen und Speichern eines Hintergrundbildes der interaktiven Anzeige unter Verwendung der einzelnen Kamera, bevor ein Benutzer mit der interaktiven Anzeige interagiert;
Erhalten einer Vielzahl von Bildern unter Verwendung der einzelnen Kamera und der zumindest zwei Spiegel;
Subtrahieren des gespeicherten Hintergrundbildes von jeder der erhaltenen Vielzahl von Bildern, um eine Vielzahl von subtrahierten Bildern bereitzustellen;
Berechnen der Position des Objekts auf der interaktiven Anzeige basierend auf der Vielzahl von subtrahierten Bildern, wobei das Berechnen der Position des Objekts Folgendes umfasst:
Berechnen eines ersten und eines zweiten Winkels für jede der Vielzahl von subtrahierten Bildern, wobei der erste Winkel einer Startposition des Objekts entspricht und der zweite Winkel einer Stoppposition des Objekts entspricht, wobei die Winkel jeweils zwischen dem Objekt, der Kameraposition und einer dazu benachbarten Rahmenseite gemessen werden; und
Berechnen von Koordinaten des Objekts in Bezug auf die interaktive Anzeige basierend auf dem berechneten ersten und zweiten Winkel für jede der Vielzahl von subtrahierten Bildern.

5. Computerprogrammprodukt zum Steuern einer interaktiven Anzeige einer elektronischen Vorrichtung, wobei die elektronische Vorrichtung ein Gehäuse; eine mit dem Gehäuse verbundene interaktive Anzeige; einen der interaktiven Anzeige zugeordneten Rahmen; und eine einzelne Kamera, die mit der interaktiven Anzeige in einer Ecke des Rahmens gekoppelt ist, beinhaltet, wobei das Computerprogrammprodukt Folgendes umfasst:
ein computerlesbares Speichermedium, das einen computerlesbaren Programmcode aufweist, der in dem Medium enthalten ist, wobei der computerlesbare Programmcode Folgendes umfasst:
computerlesbaren Programmcode, der konfiguriert ist, um eine Position eines Objekts in der Nähe der interaktiven Anzeige basierend auf den von der einzelnen Kamera aufgenommenen Bildern zu bestimmen,
wobei die elektronische Vorrichtung ferner zumindest zwei Spiegel umfasst, die an verschiedenen Rahmenseiten befestigt sind,
das Computerprogrammprodukt ferner einen computerlesbaren Programmcode umfasst, der konfiguriert ist, zum:
Bestimmen einer Position des Objekts in Bezug auf die interaktive Anzeige basierend auf Bildern, die von der einzelnen Kamera und den zumindest zwei Spiegeln durch Triangulation erhalten wurden,
**dadurch gekennzeichnet, dass** der computerlesbare Programmcode ferner konfiguriert ist, zum:
Aufnehmen und Speichern eines Hintergrundbildes der interaktiven Anzeige unter Verwendung der einzelnen Kamera, bevor ein Benutzer mit der interaktiven Anzeige interagiert;
Erhalten einer Vielzahl von Bildern unter Verwendung der einzelnen Kamera und der zumindest zwei Spiegel;
Subtrahieren des gespeicherten Hintergrundbildes von jeder der erhaltenen Vielzahl von Bildern, um eine Vielzahl von subtrahierten Bildern bereitzustellen;
Berechnen der Position des Objekts auf der interaktiven Anzeige basierend auf der Vielzahl von subtrahierten Bildern, wobei das Berechnen der Position des Objekts Folgendes umfasst:
Berechnen eines ersten und eines zweiten Winkels für jede der Vielzahl von subtrahierten Bildern, wobei der erste Winkel einer Startposition des Objekts entspricht und der zweite Winkel einer Stoppposition des Objekts entspricht, wobei die Winkel jeweils zwischen dem Objekt, der Kameraposition und einer dazu benachbarten Rahmenseite gemessen werden; und
Berechnen von Koordinaten des Objekts in Bezug auf die interaktive Anzeige basierend auf dem berechneten ersten und zweiten Winkel für jede der Vielzahl von subtrahierten Bildern.

## Revendications

1. Dispositif électronique (190) comprenant :
un boîtier (100) ;
un affichage interactif (189) connecté au boîtier (100) ;
un cadre (248) associé à l'écran interactif (189) ;
une caméra unique (238) couplée à l'affichage interactif (189) dans un coin du cadre (248) ; et
un circuit de détermination de position (192) couplé à la caméra (238) et à l'affichage interactif (189), le circuit de détermination de position (192) étant configuré pour déterminer une position d'un objet à proximité de l'affichage interactif (189) sur la base d'images capturées par la caméra unique (238),
le dispositif électronique comprenant en outre au moins deux miroirs (228, 229) fixés à différents côtés de cadre (248) ;
le circuit de détermination de position (192) étant configuré en outre pour :
déterminer une position de l'objet par rapport à l'affichage interactif (189) sur la base d'images obtenues à partir de la caméra unique et des au moins deux miroirs par triangulation ;
**caractérisé en ce que** le circuit de détermination de position (192) est configuré en outre pour :
capturer et stocker une image de fond de l'affichage interactif (189) en utilisant la caméra unique (238) avant qu'un utilisateur interagisse avec l'affichage interactif (189) ;
obtenir une pluralité d'images en utilisant la caméra unique (238) et les au moins deux miroirs (228, 229) ;
soustraire l'image de fond stockée à chacune de la pluralité obtenue d'images pour fournir une pluralité d'images soustraites ; et pour
calculer la position de l'objet sur l'affichage interactif (189) sur la base de la pluralité d'images soustraites,
dans lequel le circuit de détermination de position (192) est configuré en outre pour calculer la position de l'objet en :
calculant des premier et second angles pour chacune de la pluralité d'images soustraites, le premier angle correspondant à une position de départ de l'objet et le second angle correspondant à une position d'arrêt de l'objet, les angles étant respectivement mesurés entre l'objet, la position de caméra et un côté de cadre adjacent à celle-ci ; et
calculant des coordonnées de l'objet par rapport à l'affichage interactif (189) sur la base des premier et second angles calculés pour chacune de la pluralité d'images.

2. Dispositif électronique (190) selon la revendication 1, dans lequel la caméra unique est positionnée à l'intérieur du boîtier (100) du dispositif électronique (190), le circuit de détermination de position (192) étant configuré en outre pour déterminer une position de l'objet sur l'affichage interactif (189) sur la base d'images obtenues à partir de la caméra unique (238) positionnée à l'intérieur du boîtier (100) du dispositif électronique (190).

3. Dispositif électronique (190) selon la revendication 2, dans lequel le circuit de détermination de position (192) est configurée pour :
obtenir une image de l'objet en utilisant la caméra unique (238) positionnée à l'intérieur du boîtier (100) du dispositif électronique (190) ;
calculer un angle de départ et un angle d'arrêt de l'image sur la base de la position de l'objet par rapport à l'affichage interactif (189) ;
calculer des angles de cadre entre deux bords connus du cadre et l'objet par rapport à l'affichage interactif (189) ;
calculer une distance entre l'objet sur l'affichage interactif (189) et la caméra (238) en utilisant les angles de départ et d'arrêt et les angles de cadre calculés ; et
calculer la position et la taille de l'objet sur l'affichage interactif (189) sur la base de la distance, des angles de départ et d'arrêt et des angles de cadre calculés.

4. Procédé de commande d'un affichage interactif (189) d'un dispositif électronique (190), le dispositif électronique (190) incluant un boîtier (100) ; un affichage interactif (189) connecté au boîtier (100) ; un cadre (248) associé à l'affichage interactif (189) ; et une caméra unique (238) couplé à l'affichage interactif (189) dans un coin du cadre (248), le procédé comprenant :
la détermination d'une position d'un objet à proximité de l'affichage interactif (189) sur la base d'images capturées par la caméra unique,
dans lequel le dispositif électronique comprend en outre au moins deux miroirs fixés à différents côtés de cadre, le procédé comprenant en outre :
la détermination d'une position de l'objet par rapport à l'affichage interactif sur la base d'images obtenues à partir de la caméra unique et des au moins deux miroirs par triangulation, **caractérisé en ce que** le procédé comprend en outre :
la capture et le stockage d'une image de fond de l'affichage interactif en utilisant la caméra unique avant qu'un utilisateur interagisse avec l'affichage interactif ;
l'obtention d'une pluralité d'images en utilisant la caméra unique et les au moins deux miroirs ;
la soustraction de l'image de fond stockée à chacune de la pluralité d'images pour fournir une pluralité d'images soustraites ;
le calcul de la position de l'objet sur l'affichage interactif sur la base de la pluralité d'images soustraites, dans lequel le calcul de la position de l'objet comprend :
le calcul de premier et second angles pour chacune de la pluralité d'images soustraites, le premier angle correspondant à une position de départ de l'objet et le second angle correspondant à une position d'arrêt de l'objet, les angles étant respectivement mesurés entre l'objet, la position de caméra et un côté de cadre adjacent à celle-ci ; et
le calcul de coordonnées de l'objet par rapport à l'affichage interactif sur la base des premier et second angles calculés pour chacune de la pluralité d'images soustraites.

5. Produit de programme informatique pour commander un affichage interactif d'un dispositif électronique, le dispositif électronique incluant un boîtier ; un affichage interactif connecté au boîtier ; un cadre associé à l'affichage interactif ; et une caméra unique couplée à l'affichage interactif dans un coin du cadre, le produit de programme informatique comprenant :
un support de stockage lisible sur un ordinateur ayant un code de programme lisible sur un ordinateur incorporé dans ledit support, ledit code de programme lisible sur un ordinateur comprenant :
un code de programme lisible sur un ordinateur configuré pour déterminer une position d'un objet à proximité de l'affichage interactif sur la base d'images capturées par la caméra unique,
dans lequel le dispositif électronique comprend en outre au moins deux miroirs fixés à différents côtés de cadre,
le produit de programme informatique comprend en outre un code de programme lisible sur un ordinateur configuré pour :
déterminer une position de l'objet par rapport à l'affichage interactif sur la base d'images obtenues à partir de la caméra unique et des au moins deux miroirs par triangulation,
**caractérisé en ce que** le code de programme lisible sur un ordinateur est configuré en outre pour :
capturer et stocker une image de fond de l'affichage interactif en utilisant la caméra unique avant qu'un utilisateur interagisse avec l'affichage interactif ;
obtenir une pluralité d'images en utilisant la caméra unique et les au moins deux miroirs ;
soustraire l'image de fond stockée à chacune de la pluralité obtenue d'images pour fournir une pluralité d'images soustraites ;
calculer la position de l'objet sur l'affichage interactif sur la base de la pluralité d'images soustraites, dans lequel le calcul de la position de l'objet comprend :
le calcul des premier et second angles pour chacune de la pluralité d'images soustraites, le premier angle correspondant à une position de départ de l'objet et le second angle correspondant à une position d'arrêt de l'objet, les angles étant respectivement mesurés entre l'objet, la position de caméra et un côté de cadre adjacent à celle-ci ; et
le calcul de coordonnées de l'objet par rapport à l'affichage interactif sur la base des premier et second angles calculés pour chacune de la pluralité d'images soustraites.
